# EUROPEAN PATENT APPLICATION

(11) **EP 2 672 242 A1**
(43) Date of publication of application: **11.12.2013**
(21) Application number: 12178625.5
(22) Date of filing: 31.07.2012
(51) Int. Cl.: G01J 3/18, G01J 3/28, G01J 3/02, G01N 21/35

(54) **Compact spectrometer for remote hydrocarbon detection**

(30) Priority: 06.06.2012 US 201213489531
(71) Applicant: Raytheon Company, Waltham MA 02451 (US)
(72) Inventor: Silny, John F., Los Angeles, CA 90039 (US)
(74) Representative: Harrison Goddard Foote LLP

(57) **Abstract**

A multi-band imaging spectrometer and method of remote hydrocarbon gas detection using the spectrometer. One example of the multi-band imaging spectrometer includes a front objective optical system, and an optical spectrometer sub-system including a diffraction grating, the optical spectrometer sub-system configured to receive and collimate an input beam from the objective optical system to provide a collimated beam at the diffraction grating, the diffraction grating configured to disperse the collimated beam into at least two spectral bands. The spectrometer also includes a single entrance slit positioned between the objective optical system and the optical spectrometer sub-system and configured to direct the input beam from the objective optical system to the optical spectrometer sub-system, and a single focal plane array optically coupled to the diffraction grating and configured to produce an image from the at least two spectral bands.

## Description

### BACKGROUND

Conventional systems for detecting methane use simple "point" collectors that spectrally detect the presence of the methane. These devices are limited in their ability to survey very large areas while simultaneously providing adequate spectral and radiometric sensitivity for high probability of detection with a low rate of false alarms. Other approaches have used multiple imaging spectrometers, each configured to cover a separate spectral band. However, these systems typically have large size, weight and power requirements due to multiple spectrometer optics and multiple imaging detectors.

### SUMMARY OF INVENTION

Aspects and embodiments are directed to a system and method for remotely detecting a hydrocarbon gas, such as methane, from any remote sensing platform, such as a ground-based, space-based or airborne platform.

According to one embodiment, a multi-band imaging spectrometer comprises an objective optical system, an optical spectrometer sub-system including a diffraction grating, the optical spectrometer sub-system configured to receive and collimate an input beam from the objective optical system to provide a collimated beam at the diffraction grating, the diffraction grating configured to disperse the collimated beam into at least two spectral bands, a single entrance slit positioned between the objective optical system and the optical spectrometer sub-system and configured to direct the input beam from the objective optical system to the optical spectrometer sub-system, and a single focal plane array optically coupled to the diffraction grating and configured to receive the at least two spectral bands and to produce an image from the at least two spectral bands.

In one example the objective optical system includes a primary objective mirror of positive optical power configured to reflect the input beam, a secondary objective mirror of negative optical power configured to receive the input beam from the primary objective mirror and to reflect the input beam, and a third objective mirror of positive optical power configured to receive the input beam from the secondary objective mirror and to reflect the input beam to the single entrance slit. In another example, the optical spectrometer sub-system includes a double-pass reflective triplet. The single focal plane array may be positioned at an image plane between the single entrance slit and the double-pass reflective triplet. In one example, the diffraction grating has a single blaze angle. In one example, the at least two spectral bands include the short-wavelength infrared band and the mid-wavelength infrared spectral band. In another example, the at least two spectral bands include the short-wavelength infrared band and the long-wavelength infrared spectral band. In another example, the at least two spectral bands include the mid-wavelength infrared band and the long-wavelength infrared spectral band.

The single focal plane array may include at least one photo-detector coupled to at least one read-out integrated circuit. In one example, the single focal plane array includes a monolithic photo-detector coupled to a monolithic read-out integrated circuit. In another example, the single focal plane array includes at least two discrete photo-detectors coupled to a monolithic read-out integrated circuit. In another example, the single focal plane array includes a monolithic photo-detector coupled to at least two discrete read-out integrated circuits. In another example, the single focal plane array includes at least two discrete photo-detectors coupled to a corresponding at least two read-out integrated circuits.

According to another embodiment, a method of remote hydrocarbon gas detection using an imaging spectrometer comprises directing an input light beam through a single entrance slit, collimating the input light beam to provide a collimated beam, dispersing the collimated beam into at least two spectral bands, the spectral bands being separated in the spectral dimension, directing the at least two spectral bands to an imaging detector, and imaging and providing a spectral analysis of the at least two spectral bands at the imaging detector.

In one example the method provides remote detection of methane, the input light beam includes infrared light, and dispersing the collimated beam into the at least two spectral bands includes dispersing the infrared light into at least two of the short-wavelength infrared band, the mid-wavelength infrared band, and the long-wavelength infrared band. In one example, dispersing the collimated beam into the at least two spectral bands includes diffracting the collimated beam with a diffraction grating to provide at least two diffraction orders. In another example, directing the input light beam through the single entrance slit includes reflecting the input light beam with a reflective objective optical system to direct the input light beam to the single entrance slit.

Still other aspects, embodiments, and advantages of these exemplary aspects and embodiments are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labeled in every figure. In the figures:
**FIG. 1** is a block diagram of one example of a photo-detector configured for multispectral imaging;
**FIG. 2** is a diagram of one example of a slit re-formatter;
**FIG. 3** is a block diagram of one example of an imaging spectrometer system according to aspects of the invention;
**FIG. 4** is a diagram of one example of an imaging spectrometer system according to aspects of the invention;
**FIG. 5A** is a diagram of one example of a dual-band slit and focal plane array configuration according to aspects of the invention;
**FIG. 5B** is a diagram of another example of three-band slit and focal plane array configuration according to aspects of the invention;
**FIG. 6A** is a diagram of one example of a focal plane array configuration according to aspects of the invention;
**FIG. 6B** is a diagram of another example of a focal plane array configuration according to aspects of the invention;
**FIG. 6C** is a diagram of another example of a focal plane array configuration according to aspects of the invention;
**FIG. 6D** is a diagram of another example of a focal plane array configuration according to aspects of the invention;
**FIG. 7A** is a diagram of one example of a dual-band slit and focal plane array configuration according to aspects of the invention;
**FIG. 7B** is a diagram of another example of a dual-band slit and focal plane array configuration according to aspects of the invention;
**FIG. 8A** is a diagram of another example of a dual-band slit and focal plane array configuration according to aspects of the invention;
**FIG. 8B** is a diagram of another example of a dual-band slit and focal plane array configuration according to aspects of the invention;
**FIG. 9A** is a diagram of another example of a dual-band slit and focal plane array configuration according to aspects of the invention;
**FIG. 9B** is a diagram of another example of a dual-band slit and focal plane array configuration according to aspects of the invention;
**FIG. 10A** is a diagram of one example of a three-band slit and focal plane array configuration according to aspects of the invention; and
**FIG. 10B** is a diagram of another example of a three-band slit and focal plane array configuration according to aspects of the invention;

### DETAILED DESCRIPTION

Aspects and embodiments are directed to a compact multi-band imaging spectrometer, and to the use of a single such spectrometer to cover multiple discrete spectral regions for hydrocarbon gas detection. Imaging spectrometers are used to provide an image and also a spectral analysis of the image in a selected wavelength band of interest. These images and spectral analyses may be used to remotely detect the presence of various chemical compounds, including hydrocarbon gases, such as methane, ethane and/or propane, for example. Methane gas has multiple spectral absorbance features in the infrared wavelength band, including features in the short-wavelength infrared (SWIR) spectral region from 2.1 to 2.6 micrometers (µm), mid-wavelength infrared (MWIR) region from 3.1 to 3.5 µm, and long-wavelength infrared (LWIR) region from 7.2 to 8.2 µm. Remote sensors attempting to detect methane, or other gases, from any appreciable distance (for example, airborne or space-based sensors) will suffer from signal attenuation due to atmospheric absorption. As a result, accounting for absorption in the atmosphere, useful spectral features for methane detection include SWIR features from 2.1 to 2.5 µm, MWIR features from 3.3 to 3.5 µm, and LWIR features from 7.7 to 8.2 µm. Accordingly, a spectrometer capable of collecting and analyzing all three of these discrete spectral regions, with little to no band-to-band mis-registration, may be desirable for methane detection. Similarly, a compact spectrometer capable of collecting and analyzing discrete spectral regions containing useful features associated with other hydrocarbon gases may also be desirable.

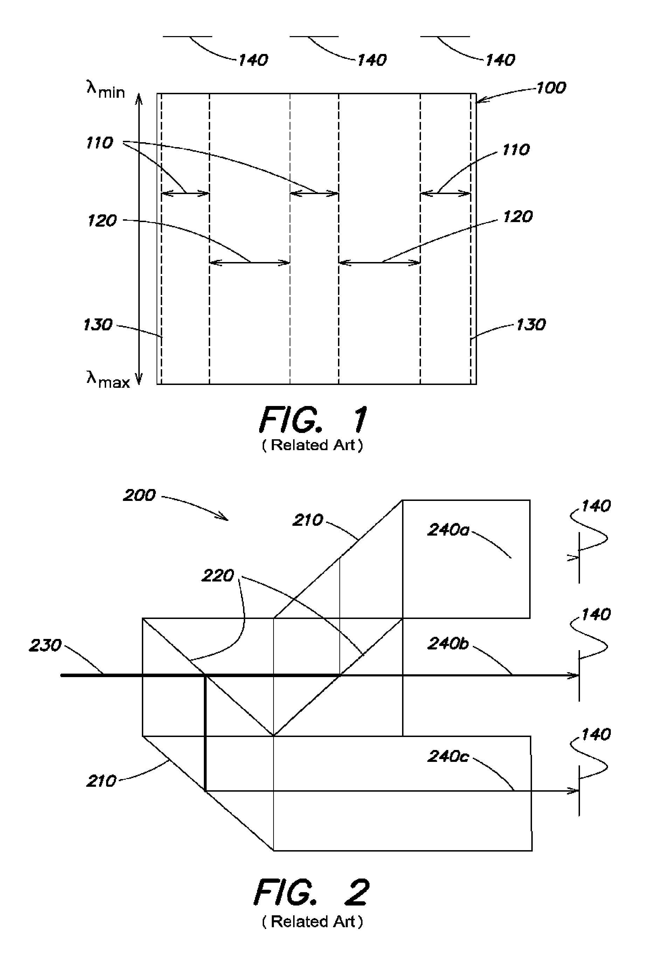

Some approaches for multi-band detection have included using a multi-band spectrometer with multiple entrance slits to spatially separate the different spectral bands. For example, a three-band spectrometer may use three entrance slits positioned between the foreoptics and the focal plane array. FIG. 1 illustrates an example of a focal plane array sensor 100 having three regions 110 each responsive to a different wavelength band. In one example, for a 1024 pixel by 1024 pixel focal plane array 100, each region 110 has a horizontal spatial extent of 160 pixels. The regions 110 are spatially separated from one another by guard zones 120. In one example, the guard zones have a horizontal spatial extent of 250 pixels. The focal plane array 100 may also be configured to include edge tolerance regions 130, which may be 22 pixels across, for example. As discussed above, three entrance slits 140 are positioned above the detection regions 110, as shown in FIG. 1, to direct incident light in the three different spectral bands to the appropriate detection region 110.

Since in this example, the three discrete spectral bands are offset from one another in the spatial dimension, a slit re-formatter is used to co-align the fields of view of the regions 110 of the focal plane array 100. FIG. 2 illustrates an example of a slit re-formatter 200. The slit re-formatter 200 includes reflective optics (e.g., mirrors) 210 and dichroic beamsplitters 220 to split the incoming light 230 into the three discrete spectral bands 240a, 240b, 240c and direct each spectral band to one of the three entrance slits 140.

In contrast to the above-discussed approach, aspects and embodiments are directed to a compact multi-band imaging spectrometer in which different diffraction orders from a diffraction grating are used to offset discrete spectral regions in the spectral dimension, rather than the spatial dimension. A single entrance slit may be used to provide spatial co-registration of the spectra from all discrete spectral bands, and avoid band-to-band mis-registration. As discussed in more detail below, a single blaze angle diffraction grating may be used to provide high diffraction efficiency for all selected discrete spectral bands. In addition, multiple detector configurations may be implemented to optimize system-level performance, such as the use of monolithic or discrete detectors and/or read-out integrated circuits (ROICs) for the multiple spectral regions. Embodiments of the imaging spectrometer are scalable with multiple configurations to provide any two or all three discrete infrared spectral bands suitable for methane detection. Similarly, embodiments of the imaging spectrometer may be configured to provide any or all of the discrete spectral bands suitable for other hydrocarbon gas detection, such as detection of ethane or propane, for example. Furthermore, certain embodiments may use a variable number of spectral channels per discrete spectral band to optimize spectral ranges and sampling intervals, as discussed in more detail below.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Also, the phraseology and terminology used herein is for the purpose of description and should not be regarded as limiting. Any references to embodiments or elements or acts of the systems and methods herein referred to in the singular may also embrace embodiments including a plurality of these elements, and any references in plural to any embodiment or element or act herein may also embrace embodiments including only a single element. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms.

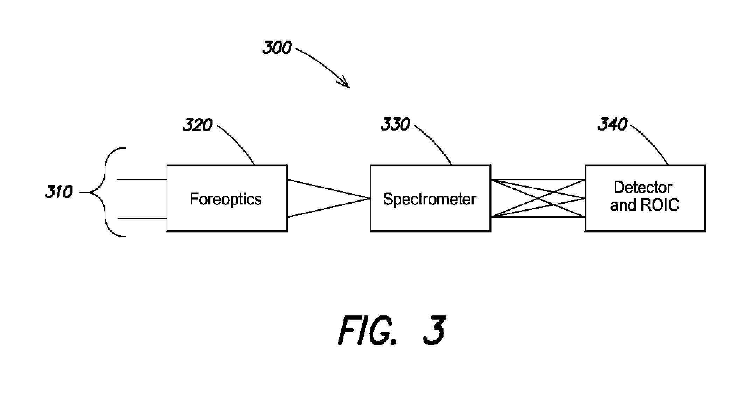

Referring to FIG. 3, there is illustrated a block diagram of one example of an imaging spectrometer system 300. According to one embodiment, a single, compact multi-band imaging spectrometer system 300 provides spatially co-located spectra covering multiple discrete spectral bands. In one example, the multiple spectral bands include infrared bands, such as the SWIR (e.g., 2.1 to 2.5 µm), MWIR (e.g., 3.3 to 3.5 µm) and LWIR (e.g., 7.7 to 8.2 µm) bands discussed above useful for remote detection of methane. According to one embodiment, the imaging spectrometer system 300 uses a single entrance slit through which incident electromagnetic radiation (also referred to as "white light") 310 is focused via an objective optical system (foreoptics) 320. The spectrometer 330 includes optical elements to perform spectrometer functions for collimation, dispersion, and imaging, as discussed further below. In one example, the dispersive element is a diffraction grating that disperses the incoming white light 310 into its constituent colors or bands, as illustrated in FIG. 3. By using multiple diffraction orders, as discussed further below, a set of discrete spectral bands may be imaged onto a focal plane at detector 340 with an offset in the spectral dimension. Order sorting filters may be used to block unwanted light for each discrete spectral band. The detector 340 may be a panchromatic imaging detector. In one example, detector 340 includes a single focal plane array, which includes one or more photo-detectors and associated read-out integrated circuitry, as discussed in more detail below.

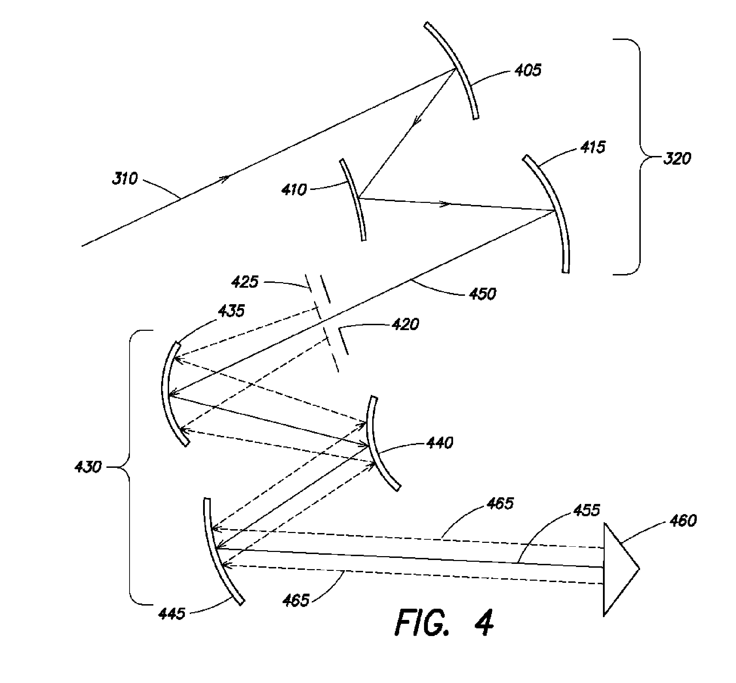

According to one embodiment the foreoptics 320 includes an all-reflective objective, which may be made solely of mirrors and with no lenses. The spectrometer 330 may include a reflective triplet spectrometer, one example of which is disclosed in U.S. Patent No. 7,382,498. FIG. 4 illustrates an example of the foreoptics 320 in combination with the spectrometer 330, according to one embodiment. In the illustrated example, the foreoptics 320 includes a set of three mirrors including a primary objective mirror 405 of positive optical power, an objective secondary mirror 410 of negative optical power, and an objective tertiary mirror 415 of positive optical power. The foreoptics 320 direct the incoming white light 310 to a single entrance slit 420. The spectrometer 330 may have a double-pass reflective form, which in the example illustrated in FIG. 4 is a double-pass reflective triplet 430. Accordingly, the panchromatic imaging detector 340 may be provided on the input side (that is, the foreoptics side) of an image plane 425, where it will receive the double-passed output light beams from the spectrometer 330. As discussed above, in one example, the detector 340 is a single focal plane array.

In one embodiment, the reflective triplet 430 includes a primary mirror 435 having a positive optical power, a secondary mirror 440 having a negative optical power, and a tertiary mirror 445 having a positive optical power. The three mirrors of the spectrometer 330 collimate the incoming beam 450 received via the entrance slit 420 and provide a collimated output beam 455 at a dispersive element 460. As discussed above, in one example, the dispersive element 460 is a diffraction grating. The dispersive element 460 is configured and oriented to receive and disperse the collimated output beam 455 and to direct the dispersed light 465 back through the double-pass reflective triplet to be incident on the detector 340 at the image plane 425. The angular direction of the dispersed light is determined by the spatial orientation of the diffraction grating 460. The blaze angle and diffraction order(s) of the diffraction grating determines the spectral dispersion of the collimated output beam 455.

Thus, the reflective triplet of the spectrometer 330 is referred to as a "double-pass" optical component because the light beams travel through the reflective triplet 430, and are collimated on the way to the dispersive element 460. Then, on the return path from the dispersive element 460, the light travels through the reflective triplet 430 and is imaged on the image plane 425. Although not shown in FIG. 4, one or more fold mirrors may be used to aid in directing the collimated output beam 455 and/or dispersed light 465.

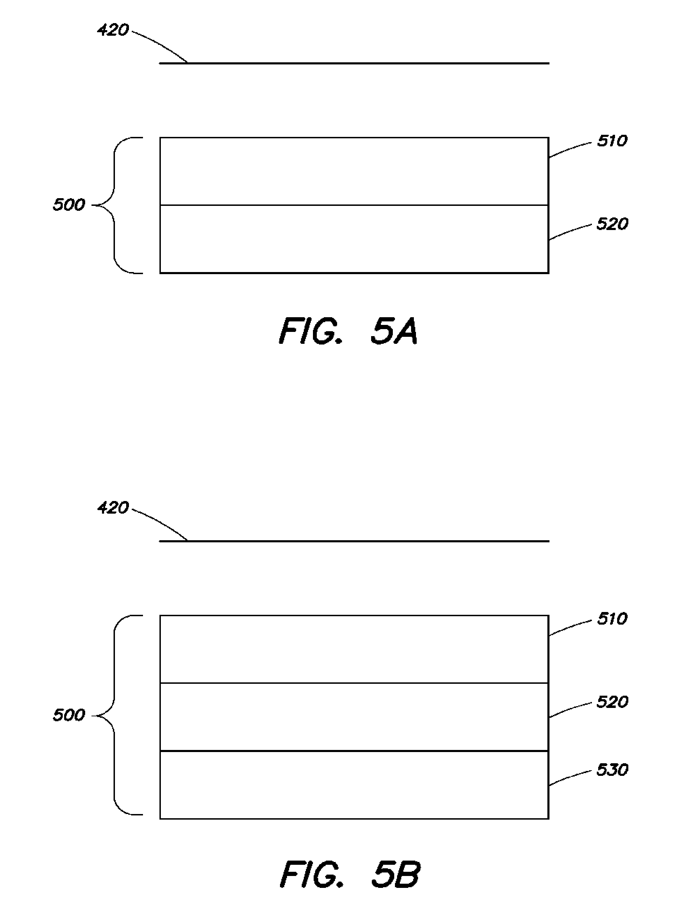

As discussed above, the focal plane array forming detector 340 may have numerous different configurations selected to optimize system performance over the spectral bands of interest. FIG. 5A and FIG. 5B illustrate two examples of entrance slit 420 and focal plane array 500 combinations supported by embodiments the imaging spectrometer. As discussed above, in one embodiment, the focal plane array 500 is positioned behind a single entrance slit 420. Referring to FIG. 5A, the focal plane array 500 may be configured to support a two-band device, and may include regions 510, 520 where the two different spectral bands fall. For example, region 510 may be where the first spectral band falls and region 520 may be where the second spectral band falls. A focal plane array is composed of two parts, namely the detector and the ROIC. The detector includes the light-sensitive material that receives light and generates an electrical current. The ROIC is the electronic circuit that captures the current during an exposure and then transfers the signal to other electronics (e.g. for storage). As discussed further below, the focal plane 500 may include any combination of detector materials and/or ROICs to support particular spectral bands of interest. Multiple configurations of the focal plane array 500 may support various configurations of two discrete spectral bands. For example, the regions 510 and 520 may include material(s) selected to support an MWIR and SWIR combination, an LWIR and MWIR configuration, or an LWIR and SWIR configuration. Referring to FIG. 5B, in another example, the focal plane array 500 is configured to support a three-band device and therefore includes three regions 510, 520, 530 where the different spectral bands fall, for example, MWIR (510), SWIR (520) and LWIR (530). The result is a flexible imaging spectrometer architecture that may be configured for optimal remote detection of a gas of interest, such as methane, for example, or another hydrocarbon gas.

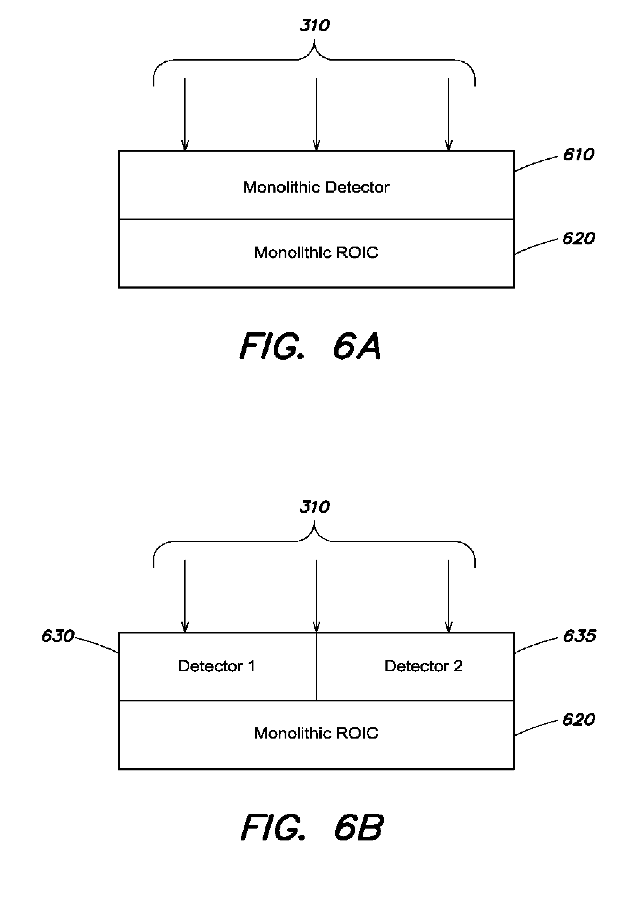

According to one embodiment, the focal plane array 500 may be further configurable in that it may include monolithic or discrete detector materials and/or read-out integrated circuits (ROICs). For example, referring to FIG. 6A, the focal plane array 500 may include a monolithic photo-detector 610 coupled to a monolithic ROIC 620. This configuration provides a simple approach; however, short-wavelength performance of the device may be limited.

In another example, the focal plane array 500 includes multiple discrete photo-detectors 630, 635 coupled to a monolithic ROIC 620, as shown in FIG. 6B. This configuration is slightly more complex than the example shown in FIG. 6A, and may require multiple hybridizations. Hybridization refers to the process of coupling the detector and ROIC parts of a focal plane array sensor. Accordingly, in examples where multiple detector materials are used, multiple hybridizations may be needed to couple each detector material to the ROIC. However, this configuration may provide better dark current performance for the short wavelength band(s), for example, the SWIR band. Dark current is the constant response exhibited by a receptor of radiation during periods when it is not actively being exposed to light. For example, dark current may include the relatively small electric current that flows through the photosensitive detector(s) when no photons are entering the device, and/or the constant response produced by a spectrochemical receptor in the absence of radiation.

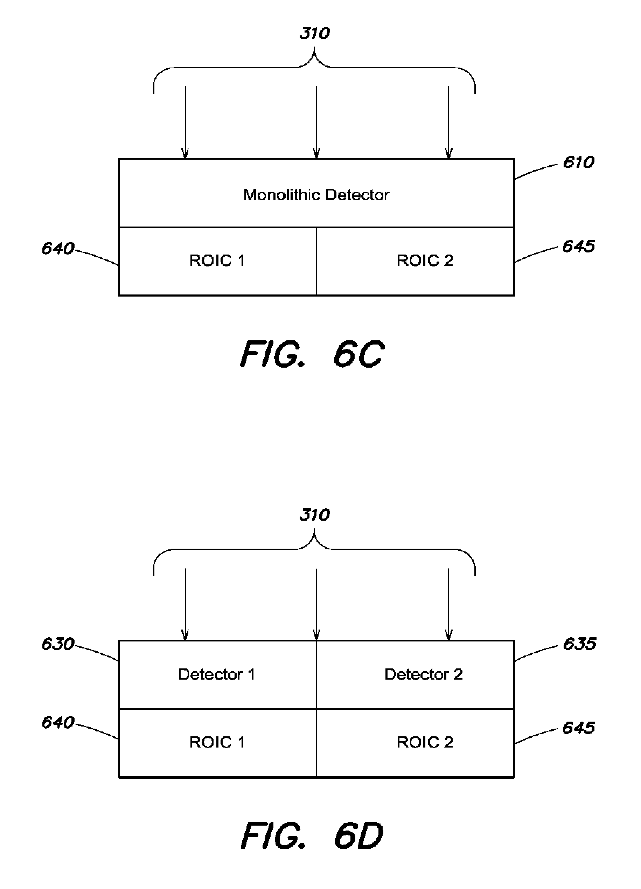

Referring to FIG. 6C, in another example, the focal plane array 500 includes a monolithic photo-detector 610 coupled to multiple discrete ROICs 640, 645. This configuration may be a more complex approach, but may allow optimization of the unit cell (focal plane array 500) for each spectral band.

FIG. 6D illustrates another example in which the focal plane array 500 includes multiple discrete photo-detectors 630, 635 coupled to multiple discrete ROICs 640, 645. This approach may be more complex, but may allow for optimized performance for several parameters, including, for example, dark current, quantum efficiency, unit cell type, full well (that is, the amount of charge that the ROIC can store), and read noise, among others.

Thus, embodiments of the multi-band imaging spectrometer may be configured and optimized in various ways to provide good multi-band spectral performance for remote detection of a gas of interest. A single entrance slit may be used to direct the incoming electromagnetic radiation to the spectrometer components 330, thereby avoiding band-to-band mis-registration. The radiation is dispersed into its spectral components using a diffraction grating and multiple diffraction orders to achieve spectral separation of two or more spectral bands of interest. The detector 340 may be configured in various ways, as discussed above, using different materials and any of several photo-detector and ROIC configurations to achieve good performance for all spectral bands.

The function and advantages of these and other embodiments will be more fully understood from the following examples. The examples are intended to be illustrative in nature and are not to be considered as limiting the scope of the systems and methods discussed herein. Table 1 below provides a summary of the following four examples which are discussed in more detail below. For simplicity, each of the four examples used a fixed number of spectral channels, namely 256, per discrete spectral band (e.g. the short wave infrared, SWIR). However, as discussed above, in other embodiments, the number of channels per band may be varied to optimize performance.

**TABLE 1**

| | Number of Bands | Spectral Bands | Diffraction Orders | Spectral Range | SSI | Blaze WL | Avg. DE |
|---|---|---|---|---|---|---|---|
| Example 1 | 2 | SWIR | 4 | 2.2 to 2.5 µm | 1.0 nm | 9.7 µm | 81% |
| | | MWIR | 3 | 3.3 to 3.7 µm | 1.4 nm | | 88% |
| Example 2 | 2 | MWIR | 5 | 3.3 to 3.6 µm | 1.0 nm | 16.8 µm | 91% |
| | | LWIR | 2 | 7.7 to 8.3 µm | 2.5 nm | | 91% |
| Example 3 | 2 | SWIR | 3 | 2.1 to 2.5 µm | 1.7 nm | 9.6 µm | 84% |
| | | LWIR | 1 | 7.5 to 8.8 µm | 5.0 nm | | 83% |
| | | SWIR | 3 | 2.3 to 2.6 µm | 1.0 nm | | 92% |
| Example 4 | 3 | MWIR | 2 | 3.0 to 3.5 µm | 1.5nm | 6.9 µm | 94% |
| | | LWIR | 1 | 7.7 to 8.5 µm | 3.0 nm | | 89% |

In each example, the design should obtain separation (in the spectral) direction of each band, such that the bands do not land on the same part of the focal plane array (see FIG. 5A or 5B), and a high diffraction efficiency (for high sensitivity) is desired. The degrees of freedom in each design are the grating diffraction orders, the minimum wavelength of one of the spectral bands (the other is determined), and the spectral sampling interval of one of the spectral bands (the other is determined).

### Example 1

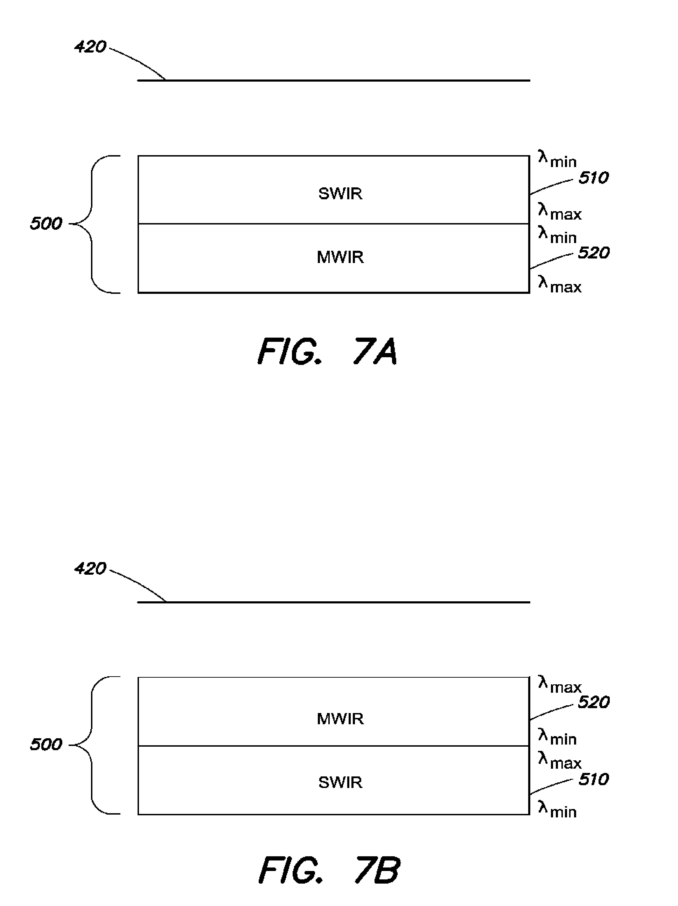

This example demonstrates performance of an embodiment of a dual-band spectrometer configured to detect and analyze at least a portion of each of the SWIR and MWIR spectral bands. In particular, referring to FIGS. 7A and 7B, in this example, the focal plane array 500 includes a first region 510 responsive to electromagnetic radiation in the SWIR spectral range of approximately 2.2 to 2.5 µm, and a second region 520 responsive to electromagnetic radiation in the MWIR spectral range of approximately 3.3 to 3.7 µm. The band layout in the focal plane array 500 may be as shown in either FIG. 7A or FIG. 7B, and may depend on the grating orientation. The focal plane array 500 may include one or more material(s) suitable for photo-detection in the infrared band. One example of a material commonly used for infrared detection is mercury-cadmium-telluride (HgCdTe). By selecting an appropriate ratio of Hg to Cd, the detector's spectral sensitivity can be changed (for example, to be sensitive in the SWIR band versus the MWIR band). Thus, the material may be written as Hg₁₋ₓCdₓTe, in which x is the factional doping concentration of Cd and is selected to choose the correct spectral response (e.g. x = 0.3 for MWIR sensitivity).

In this example, the third diffraction order was used for the MWIR spectral band, and the fourth diffraction order was used for the SWIR spectral band. The spectral sampling interval (SSI) was 1.4 nm for the third diffraction order and 1.05 nm for the fourth diffraction order. Table 2 provides the center wavelengths (CWL) detected by each of several example channels in the focal plane array 500.

**TABLE 2**

| | Diffraction Order 3 | Diffraction Order 4 |
|---|---|---|
| Channel | CWL (µm) | CWL (µm) |
| -256 | 2.94 | 2.21 |
| -1 | 3.30 | 2.47 |
| 0 | 3.30 | 2.48 |
| 255 | 3.66 | 2.74 |

In this example, a diffraction grating (for dispersive element 460) having a blaze wavelength of 9.7 µm was used, resulting in a peak diffraction efficiency (DE) of approximately 95% at the grating blaze wavelength. Table 1 above provides the average diffraction efficiency for each spectral band. Table 3 below provides the diffraction efficiencies at certain wavelengths within each of the SWIR and MWIR spectral bands for this example configuration.

**TABLE 3**

| Diffraction order 3 | | Diffraction order 4 | |
|---|---|---|---|
| CWL (µm) | DE | CWL (µm) | DE |
| 3.30 | 94% | 2.20 | 52% |
| 3.35 | 92% | 2.25 | 68% |
| 3.40 | 89% | 2.30 | 81% |
| 3.45 | 85% | 2.35 | 90% |
| 3.50 | 80% | 2.40 | 94% |
| | | 2.45 | 95% |
| | | 2.50 | 91% |

### Example 2

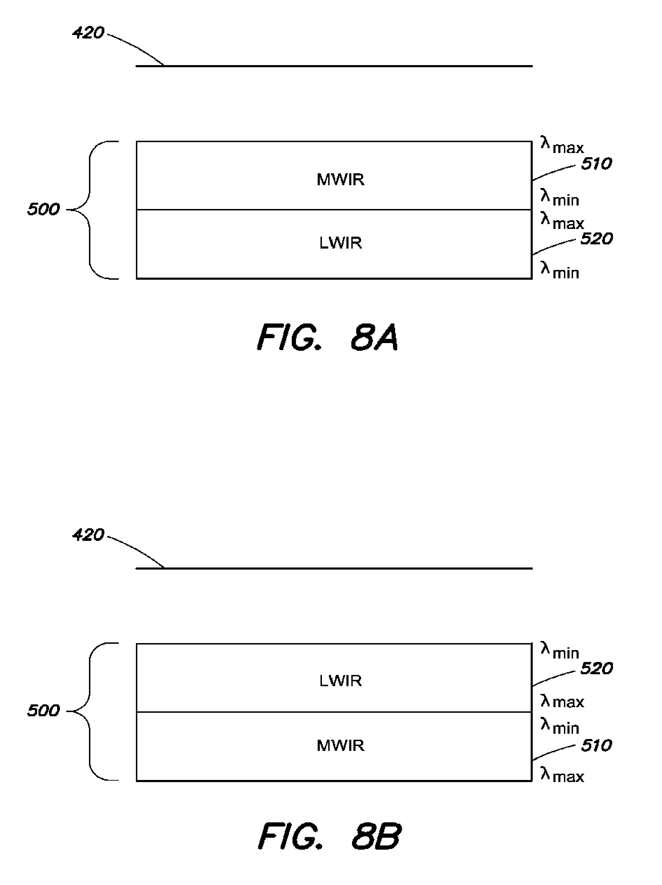

This example demonstrates performance of an embodiment of a dual-band spectrometer configured to detect and analyze at least a portion of each of the SWIR and MWIR spectral bands. In particular, referring to FIGS. 8A and 8B, in this example, the focal plane array 500 includes a first region 510 responsive to electromagnetic radiation in the MWIR spectral range of approximately 3.3 to 3.6 µm, and a second region 520 responsive to electromagnetic radiation in the LWIR spectral range of approximately 7.7 to 8.3 µm. The band layout in the focal plane array 500 may be as shown in either FIG. 8A or FIG. 8B, and may depend on the grating orientation.

In this example, the fifth diffraction order was used for the MWIR spectral band, and the second diffraction order was used for the LWIR spectral band. The spectral sampling interval (SSI) was 2.5 nm for the second diffraction order and 1 nm for the fifth diffraction order. Table 4 provides the center wavelengths (CWL) detected by each of several example channels in the focal plane array 500.

**TABLE 4**

| | Diffraction Order 2 | Diffraction Order 5 |
|---|---|---|
| Channel | CWL (µm) | CWL (µm) |
| 0 | 7.700 | 3.080 |
| 255 | 8.338 | 3.335 |
| 256 | 8.340 | 3.336 |
| 511 | 8.978 | 3.591 |

In this example, a diffraction grating (for dispersive element 460) having a blaze wavelength of 16.8 µm was used, resulting in a peak diffraction efficiency (DE) of approximately 95% at the grating blaze wavelength. Table 5 below provides the diffraction efficiencies at certain wavelengths within each of the MWIR and LWIR spectral bands for this example configuration.

**TABLE 5**

| Diffraction order 2 | | Diffraction order 5 | |
|---|---|---|---|
| CWL (µm) | DE | CWL (µm) | DE |
| 7.70 | 85% | 3.30 | 92% |
| 7.80 | 88% | 3.35 | 95% |
| 7.90 | 90% | 3.40 | 94% |
| 8.00 | 92% | 3.45 | 90% |
| 8.10 | 93% | 3.50 | 84% |
| 8.20 | 94% | | |
| 8.30 | 95% | | |

### Example 3

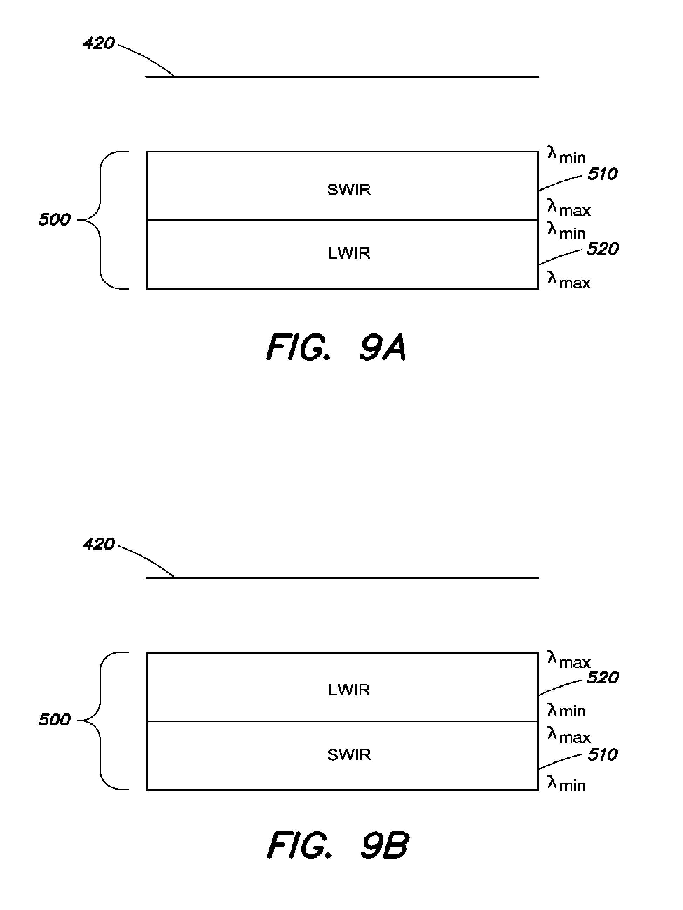

This example demonstrates performance of an embodiment of a dual-band spectrometer configured to detect and analyze at least a portion of each of the SWIR and LWIR spectral bands. In particular, referring to FIGS. 9A and 9B, in this example, the focal plane array 500 includes a first region 510 responsive to electromagnetic radiation in the SWIR spectral range of approximately 2.1 to 2.5 µm, and a second region 520 responsive to electromagnetic radiation in the LWIR spectral range of approximately 7.7 to 8.8 µm. The band layout in the focal plane array 500 may be as shown in either FIG. 9A or FIG. 9B, and may depend on the grating orientation.

In this example, the third diffraction order was used for the SWIR spectral band, and the first diffraction order was used for the LWIR spectral band. The spectral sampling interval (SSI) was 5 nm for the first diffraction order and 1.7 nm for the third diffraction order. Table 6 provides the center wavelengths (CWL) detected by each of several example channels in the focal plane array 500.

**TABLE 6**

| | Diffraction Order 2 | Diffraction Order 5 |
|---|---|---|
| Channel | CWL (µm) | CWL (µm) |
| -256 | 6.220 | 2.073 |
| -1 | 7.495 | 2.498 |
| 0 | 7.500 | 2.500 |
| 255 | 8.775 | 2.925 |

In this example, a diffraction grating (for dispersive element 460) having a blaze wavelength of 9.6 µm was used, resulting in a peak diffraction efficiency (DE) of approximately 95% at the grating blaze wavelength. Table 7 below provides the diffraction efficiencies at certain wavelengths within each of the MWIR and LWIR spectral bands for this example configuration.

**TABLE 7**

| Diffraction order 2 | | Diffraction order 5 | |
|---|---|---|---|
| CWL (µm) | DE | CWL (µm) | DE |
| 7.70 | 78% | 3.30 | 92% |
| 7.80 | 80% | 3.35 | 88% |
| 7.90 | 82% | 3.40 | 84% |
| 8.00 | 84% | 3.45 | 80% |
| 8.10 | 85% | 3.50 | 74% |
| 8.20 | 87% | | |
| 8.30 | 88% | | |

### Example 4

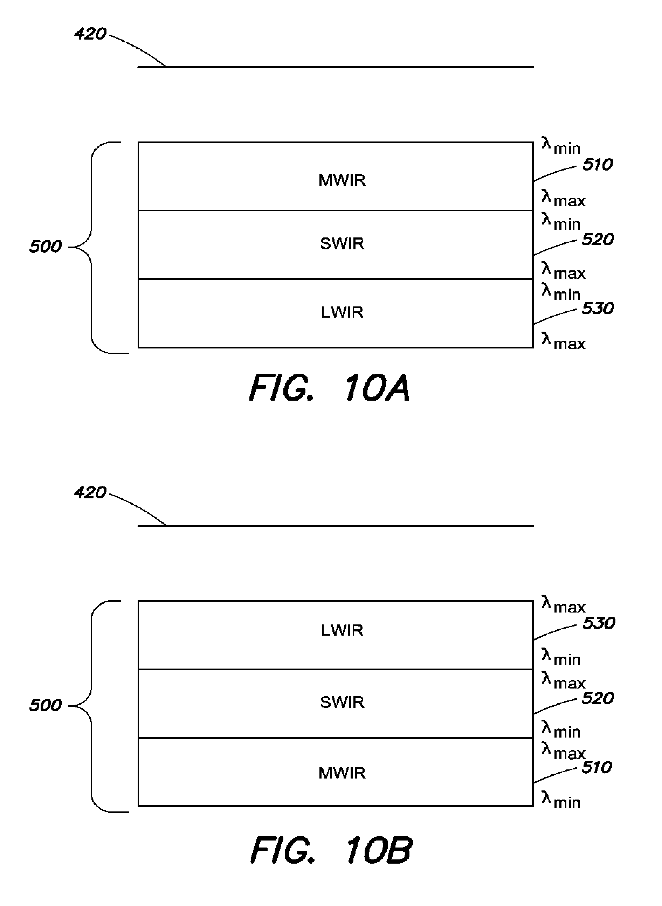

This example demonstrates performance of an embodiment of a three-band spectrometer configured to detect and analyze at least a portion of each of the SWIR, MWIR and LWIR spectral bands. In particular, referring to FIGS. 10A and 10B, in this example, the focal plane array 500 includes a first region 510 responsive to electromagnetic radiation in the MWIR spectral range of approximately 3.0 to 3.5 µm, a second region 520 responsive to electromagnetic radiation in the SWIR spectral range of approximately 2.3 to 2.6 µm, and a third region 530 configured to be responsive to radiation in the LWIR spectral range of approximately 7.7 to 8.5 µm. The band layout in the focal plane array 500 may be as shown in either FIG. 10A or FIG. 10B, and may depend on the grating orientation.

In this example, the third diffraction order was used for the SWIR band, the second diffraction order was used for the MWIR spectral band, and the first diffraction order was used for the LWIR spectral band. The spectral sampling interval (SSI) was 3 nm for the first diffraction order, 1.5 nm for the second diffraction order, and 1 nm for the third diffraction order. Table 8 provides the center wavelengths (CWL) detected by each of several example channels in the focal plane array 500.

**TABLE 8**

| | Diffraction Order 1 | Diffraction Order 2 | Diffraction Order 3 |
|---|---|---|---|
| Channel | CWL (µm) | CWL (µm) | CWL (µm) |
| -512 | 6.164 | 3.082 | 2.055 |
| -257 | 6.929 | 3.465 | 2.310 |
| -256 | 6.932 | 3.466 | 2.311 |
| -1 | 7.697 | 3.849 | 2.566 |
| 0 | 7.700 | 3.850 | 2.567 |
| 255 | 8.465 | 4.233 | 2.822 |

In this example, a diffraction grating (for dispersive element 460) having a blaze wavelength of 6.9 µm was used, resulting in a peak diffraction efficiency (DE) of approximately 95% at the grating blaze wavelength. Table 8 below provides the diffraction efficiencies at certain wavelengths within each of the SWIR, MWIR and LWIR spectral bands for this example configuration.

**TABLE 9**

| Diffraction order 1 | | Diffraction order 2 | | Diffraction Order 3 | |
|---|---|---|---|---|---|
| CWL (µm) | DE | CWL (µm) | DE | CWL (µm) | DE |
| 7.70 | 92% | 3.30 | 92% | 2.20 | 89% |
| 7.80 | 91% | 3.35 | 94% | 2.25 | 93% |
| 7.90 | 90% | 3.40 | 95% | 2.30 | 95% |
| 8.00 | 89% | 3.45 | 95% | 2.35 | 94% |
| 8.10 | 89% | 3.50 | 95% | 2.40 | 91% |
| 8.20 | 88% | | | | |
| 8.30 | 87% | | | | |

Having described above several aspects of at least one embodiment, it is to be appreciated various alterations, modifications, and improvements will readily occur to those skilled in the art. Such alterations, modifications, and improvements are intended to be part of this disclosure and are intended to be within the scope of the invention. Accordingly, the foregoing description and drawings are by way of example only, and the scope of the invention should be determined from proper construction of the appended claims, and their equivalents.

## Claims

1. A multi-band imaging spectrometer comprising:
an objective optical system;
an optical spectrometer sub-system including a diffraction grating, the optical spectrometer sub-system configured to receive and collimate an input beam from the objective optical system to provide a collimated beam at the diffraction grating, the diffraction grating configured to disperse the collimated beam into at least two spectral bands;
a single entrance slit positioned between the objective optical system and the optical spectrometer sub-system and configured to direct the input beam from the objective optical system to the optical spectrometer sub-system; and
a single focal plane array optically coupled to the diffraction grating and configured to receive the at least two spectral bands and to produce an image from the at least two spectral bands.

2. The multi-band imaging spectrometer of claim 1, wherein the objective optical system includes:
a primary objective mirror of positive optical power configured to reflect the input beam;
a secondary objective mirror of negative optical power configured to receive the input beam from the primary objective mirror and to reflect the input beam; and
a third objective mirror of positive optical power configured to receive the input beam from the secondary objective mirror and to reflect the input beam to the single entrance slit.

3. The multi-band imaging spectrometer of claim 1 or 2, wherein the optical spectrometer sub-system includes a double-pass reflective triplet.

4. The multi-band imaging spectrometer of claim 3, wherein the single focal plane array is positioned at an image plane between the single entrance slit and the double-pass reflective triplet.

5. The multi-band imaging spectrometer of any preceding claim, wherein the at least two spectral bands include:
the short-wavelength infrared band and the mid-wavelength infrared spectral band; or
the short-wavelength infrared band and the long-wavelength infrared spectral band.

6. The multi-band imaging spectrometer of any of claims 1 to 4, wherein the at least two spectral bands include the mid-wavelength infrared band and the long-wavelength infrared spectral band.

7. The multi-band imaging spectrometer of claim 6, wherein the at least two spectral bands further includes the short-wavelength infrared band.

8. The multi-band imaging spectrometer of any preceding claim, wherein the single focal plane array includes:
at least one photo-detector coupled to at least one read-out integrated circuit;
a monolithic photo-detector coupled to a monolithic read-out integrated circuit; or
at least two discrete photo-detectors coupled to a monolithic read-out integrated circuit.

9. The multi-band imaging spectrometer of any of claims 1 to 7, wherein the single focal plane array includes a monolithic photo-detector coupled to at least two discrete read-out integrated circuits.

10. The multi-band imaging spectrometer of any of claims 1 to 7, wherein the single focal plane array includes at least two discrete photo-detectors coupled to a corresponding at least two read-out integrated circuits.

11. The multi-band imaging spectrometer of any preceding claim, wherein the diffraction grating has a single blaze angle.

12. A method of remote hydrocarbon gas detection using an imaging spectrometer comprising:
directing an input light beam through a single entrance slit;
collimating the input light beam to provide a collimated beam;
dispersing the collimated beam into at least two spectral bands, the spectral bands being separated in the spectral dimension;
directing the at least two spectral bands to an imaging detector; and
imaging and providing a spectral analysis of the at least two spectral bands at the imaging detector.

13. The method of claim 12, wherein the method provides remote detection of methane, the input light beam includes infrared light, and wherein dispersing the collimated beam into the at least two spectral bands includes dispersing the infrared light into at least two of the short-wavelength infrared band, the mid-wavelength infrared band, and the long-wavelength infrared band.

14. The method of claim 12 or 13, wherein dispersing the collimated beam into the at least two spectral bands includes diffracting the collimated beam with a diffraction grating to provide at least two diffraction orders.

15. The method of claim 12, 13 or 14, wherein directing the input light beam through the single entrance slit includes reflecting the input light beam with a reflective objective optical system to direct the input light beam to the single entrance slit.

## Amended claims

### Amended claims in accordance with Rule 137(2) EPC.

**1.** A multi-band imaging spectrometer comprising:
an objective optical system (320);
an optical spectrometer sub-system (330) including a diffraction grating (460), the optical spectrometer sub-system (330) configured to receive and collimate an input beam (450) from the objective optical system (320) to provide a collimated beam at the diffraction grating (460), **characterised in that** the diffraction grating (460) configured to disperse the collimated beam into at least two offset spectral bands, the spectral bands being separated in the spectral dimension; and
a single entrance slit (420) positioned between the objective optical system (320) and the optical spectrometer sub-system (330) and configured to direct the input beam (450) from the objective optical system (320) to the optical spectrometer sub-system (330);
a single focal plane array (340, 500, 610, 630, 635) optically coupled to the diffraction grating (460) and configured to receive the at least two spectral bands and to produce an image from the at least two spectral bands.

**2.** The multi-band imaging spectrometer of claim 1, wherein the objective optical system (320) includes:
a primary obj ective mirror (405) of positive optical power configured to reflect the input beam (450);
a secondary objective mirror (410) of negative optical power configured to receive the input beam (450) from the primary objective mirror (405) and to reflect the input beam (450); and
a third objective mirror (415) of positive optical power configured to receive the input beam (450) from the secondary objective mirror (410) and to reflect the input beam (450) to the single entrance slit (420).

**3.** The multi-band imaging spectrometer of claim 1 or 2, wherein the optical spectrometer sub-system (330) includes a double-pass reflective triplet (430).

**4.** The multi-band imaging spectrometer of claim 3, wherein the single focal plane array (340, 500, 610, 630, 635) is positioned at an image plane (425) between the single entrance slit (420) and the double-pass reflective triplet (430).

**5.** The multi-band imaging spectrometer of any preceding claim, wherein the at least two spectral bands include:
the short-wavelength infrared band and the mid-wavelength infrared spectral band; or
the short-wavelength infrared band and the long-wavelength infrared spectral band.

**6.** The multi-band imaging spectrometer of any of claims 1 to 4, wherein the at least two spectral bands include the mid-wavelength infrared band and the long-wavelength infrared spectral band.

**7.** The multi-band imaging spectrometer of claim 6, wherein the at least two spectral bands further includes the short-wavelength infrared band.

**8.** The multi-band imaging spectrometer of any preceding claim, wherein the single focal plane array (340, 500, 610, 630, 635) includes:
at least one photo-detector (610, 630, 645) coupled to at least one read-out integrated circuit (620, 640, 645);
a monolithic (610) photo-detector coupled to a monolithic read-out integrated circuit (620); or
at least two discrete photo-detectors (630, 635) coupled to a monolithic read-out integrated circuit (620).

**9.** The multi-band imaging spectrometer of any of claims 1 to 7, wherein the single focal plane array (340, 500, 610, 630, 635) includes a monolithic photo-detector (610, 640, 645) coupled to at least two discrete read-out integrated circuits (640, 645).

**10.** The multi-band imaging spectrometer of any of claims 1 to 7, wherein the single focal plane array (340, 500, 610, 630, 635) includes at least two discrete photo-detectors (630, 635) coupled to a corresponding at least two read-out integrated circuits (640, 645).

**11.** The multi-band imaging spectrometer of any preceding claim, wherein the diffraction grating (460) has a single blaze angle.

**12.** A method of remote hydrocarbon gas detection using an imaging spectrometer comprising:
directing an input light beam through a single entrance slit (420);
collimating the input light beam to provide a collimated beam (450);
**characterised by**:
dispersing the collimated beam into at least two offset spectral bands, the spectral bands being separated in the spectral dimension;
directing the at least two spectral bands to an imaging detector (340, 500, 610, 630, 635); and
imaging and providing a spectral analysis of the at least two spectral bands at the imaging detector (340, 500, 610, 630, 635).

**13.** The method of claim 12, wherein the method provides remote detection of methane, the input light beam includes infrared light, and wherein dispersing the collimated beam into the at least two spectral bands includes dispersing the infrared light into at least two of the short-wavelength infrared band, the mid-wavelength infrared band, and the long-wavelength infrared band.

**14.** The method of claim 12 or 13, wherein dispersing the collimated beam into the at least two spectral bands includes diffracting the collimated beam with a diffraction grating (460) to provide at least two diffraction orders.

**15.** The method of claim 12, 13 or 14, wherein directing the input light beam through the single entrance slit (420) includes reflecting the input light beam with a reflective objective optical system to direct the input light beam to the single entrance slit (420).
